# EUROPEAN PATENT SPECIFICATION

(11) **EP 1 925 167 B1**
(45) Date of publication and mention of the grant of the patent: **25.03.2015**
(21) Application number: 06801315.0
(22) Date of filing: 14.08.2006
(51) Int. Cl.: H04Q 1/24, H01Q 1/38

(54) **WIRELESS COMMUNICATION DEVICE WITH STRATEGICALLY POSITIONED ANTENNA**
FUNKKOMMUNIKATIONSVORRICHTUNG MIT STRATEGISCH POSITIONIERTER ANTENNE
DISPOSITIF DE COMMUNICATION RADIO A ANTENNE A POSITION STRATEGIQUE

(30) Priority: 31.08.2005 US 216776
(43) Date of publication of application: 28.05.2008
(73) Proprietor: Motorola Mobility LLC, Libertyville, IL 60048 (US)
(72) Inventor: KINEZOS, Christos, L., Sunrise, FL 33322 (US); MATTSSON, Jan-Ove, U., Plantation, FL 33322 (US); PONCE DE LEON, Lorenzo, A., Lake Worth, FL 33467 (US)
(74) Representative: Openshaw, Paul Malcolm
(86) International application number: PCT/US2006/031469
(87) International publication number: WO 2007/027411

(56) References cited:
- EP-A- 1 460 713
- US-A- 5 561 437
- US-A- 6 016 126
- US-A- 6 061 126
- US-A1- 2004 108 959
- US-A1- 2004 233 109

## Description

### BACKGROUND OF THE INVENTION

### 1. Field of the Invention

The present invention relates to antennas in a wireless communication device in general and global positioning system antennas used in the wireless communication device in particular.

### 2. Description of the Related Art

Conventional global positioning system (GPS) antennas are designed to have a strong directivity in the radiation pattern in the area directly facing the GPS satellites. Generally, the antenna rises out of the very top of the unit or is positioned near the top of the radio. Many times, a user will attempt to obtain a GPS fix by holding the mobile unit in a substantially horizontal position, which enables the user to better see the display. As such, the keypad and the antenna of the mobile unit will also be in a substantially horizontal position. As a result, the radiation pattern for the GPS antenna is not suited for this type of situation, which may have a significant impact on the ability of the mobile unit to get fast and accurate GPS fixes.

US 6 016 126 (A) discloses dual-band antennas that include first and second radiating elements configured to be enclosed within a radiotelephone between a keypad and a top housing and to occupy available space existing around the perimeter of the keypad and/or between the keys of a keypad. First and second coplanar radiating elements are maintained in adjacent spaced-apart relationship with a circuit board underlying the keypad. The underlying circuit board serves as a ground plane for directing radiation from the antenna outwardly in a direction normal to the circuit board.

US 5 561 437 (A) discloses a radio communication device that includes a radio signal source positioned in the first housing portion. A second housing portion has a first end movably supported on the first housing portion such that the housing portions are reconfigurable between an extended position and a collapsed position. A dipole antenna has a first arm positioned in the first housing portion and a second arm positioned in the second housing portion. A respective end of each of the arms is connected to the signal source.

### SUMMARY OF THE INVENTION

In a first aspect, the present invention provides a wireless communication device, as claimed in claim 1.

In a further aspect, the present invention provides a method of building a wireless communication device, as claimed in claim 6.

### BRIEF DESCRIPTION OF THE DRAWINGS

The features of the present invention, which are believed to be novel, are set forth with particularity in the appended claims. The invention, together with further objects and advantages thereof, may best be understood by reference to the following description, taken in conjunction with the accompanying drawings, in the several figures of which like reference numerals identify like elements, and in which:
FIG. 1 illustrates a wireless communication device receiving signal reception from a transmitting station pursuant to an embodiment of the present invention;
FIG. 2 illustrates a wireless communication device with a faceplate showing an antenna as per an embodiment of the present invention; and
FIG. 3 illustrates a method of building a wireless communication device having a strategically positioned antenna according to one embodiment of the present invention.

### DETAILED DESCRIPTION OF THE INVENTION

While the specification concludes with claims defining the features of the invention that are regarded as novel, it is believed that the invention will be better understood from a consideration of the following description in conjunction with the drawings, in which like reference numerals are carried forward.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting but rather to provide an understandable description of the invention.

The terms "a" or "an," as used herein, are defined as one or more than one. The term "plurality," as used herein, is defined as two or more than two. The term "another," as used herein, is defined as at least a second or more. The terms "including" and/or "having," as used herein, are defined as comprising (i.e., open language). The term "coupled," as used herein, is defined as connected, although not necessarily directly, and not necessarily mechanically. The term "suppressing" can be defined as reducing or removing, either partially or completely.

The terms "program," "software application," and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

A wireless communication device can receive signals from and transmit signals to base stations for data and voice communications using various antennas positioned within the wireless communication device. With increased connectivity, several wireless communication devices are Global Positioning System (GPS)-technology enabled. Several wireless communication devices specifically use GPS technology. Similarly, Bluetooth, infrared, and other communication technologies are enabled due to transmitter and receiver antennas embedded in the wireless communication device.

Generally, the position of the antenna is determined based on a direction of the signal reception. For example, known data and voice communication antennas on wireless communication devices are positioned on top of the wireless communication device to receive signals from all possible directions. The position of the antenna plays an integral role in receiving and transmitting an enhanced signal. An enhanced signal provides better quality for the user. For example, an antenna with a radiation pattern pointing to the transmission source enables the wireless communication device to receive an enhanced signal as opposed to an antenna that is embedded deep within the wireless communication device. Often, the visual display unit can also provide interference with signal reception if the antenna is positioned close to the visual display unit.

The present invention can improve the ability of a wireless device to receive certain signals, such as GPS signals, because an antenna that can capture such signals can be strategically positioned to do so. As an example, the antenna can be positioned beneath a user interface, such as a keypad, which can cause the radiation pattern of the antenna to be better suited for the reception of GPS signals from GPS satellites when a user holds the wireless device in a substantially horizontal position to obtain a GPS fix.

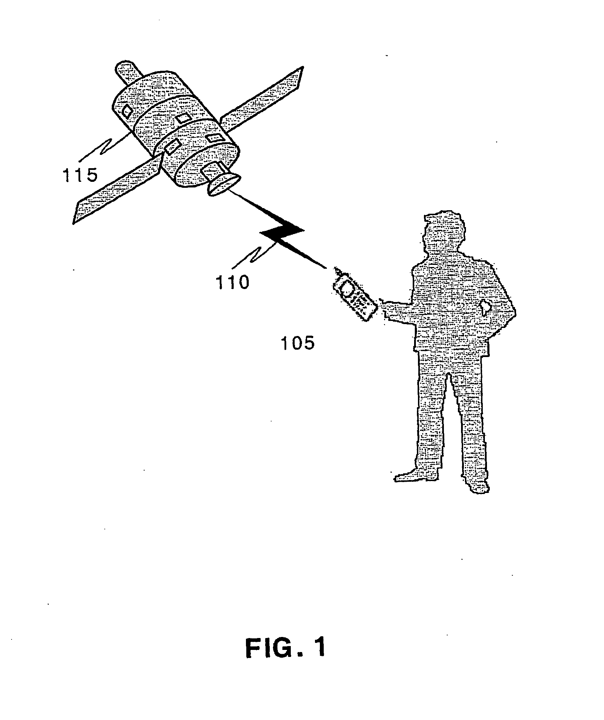

Turning now to FIG. 1, a user with a wireless communication device 105 is shown. In one embodiment, the wireless communication device 105 can be GPS-enabled and can receive signals from a transmitting station 115 as well as voice and data signals from a base station 110 on the ground. The transmitting station 115 can also be a satellite. The user also receives data and voice signals from the base station 110. In one arrangement (although not shown here), the wireless communication device 105 can include a GPS antenna that can be positioned beneath a user interface of the wireless communication device 105, such as a keypad. Positioning the GPS antenna beneath the user interface provides an enhanced signal to the user when the GPS enabled wireless communication device is placed in a navigation mode. A navigation mode on a GPS enabled-wireless communication device is a mode where the wireless communication device is held to enable a user to obtain positional information. In many instances, a user will position the wireless device 105 in a substantially horizontal position, with respect to the ground. At this point, the keypad on most mobile devices will be pointing substantially upwards towards the open sky.

As noted earlier, the user interface can be a keypad, and hence the antenna can be positioned between a face of the keypad and a base plate of the keypad of the wireless communication device 105, as will be shown later. Positioning the antenna in this manner can provide a stronger signal reception as the wireless communication device 105 is placed in the navigation mode. The reception of these signals is enhanced because the antenna may be facing or at least substantially facing the signal source, such as one or more of the transmitting stations 115, which also can cause the radiation pattern of the antenna to be directed to the signal source.

The signal reception can be enhanced in relation to the antenna being positioned in certain other locations of the wireless communication device 105, such as at the top of the wireless communication device 105. Those skilled in the art shall appreciate, however, that the antenna can be positioned in other suitable locations (other than underneath the user interface) to improve the chances that the radiation pattern of the antenna may be directed towards the signal source. Additionally, the antenna may not be restricted to a GPS antenna. Any antenna receiving and/or transmitting radio frequency signals may be positioned beneath the user interface to provide a better signal reception. For example, positioning a Bluetooth antenna or a wireless local area network (WLAN) beneath the user interface will reduce the interference that may be experienced from the visual display unit and therefore provide enhanced signal reception.

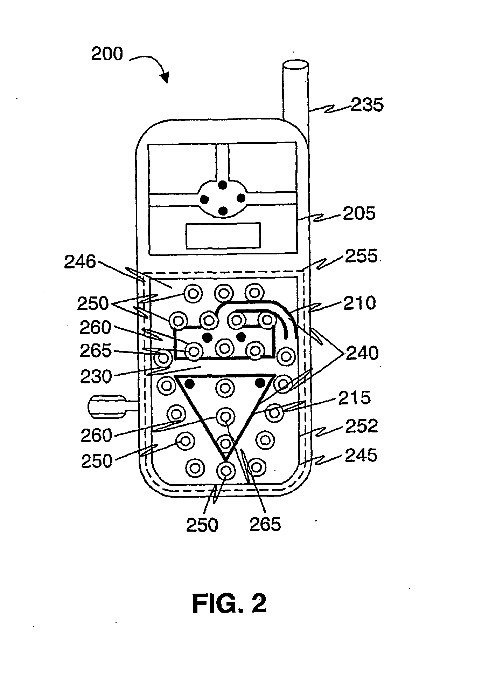

Turning now to FIG. 2, a wireless communication device 200 (similar to the wireless communication device 105 of FIG. 1) is shown comprising an antenna 240, according to one embodiment of the present invention. The wireless communication device 200 can include a visual display unit 205 and a user interface 245, which can be a keypad 246 having one or more keypad buttons 250. The keypad 246 can include a faceplate 252 and a base plate 255, which is represented by a dashed outline. In one arrangement, the antenna 240 can be placed between the faceplate 252 and the base plate 255 of the user interface 245 (or keypad 246). The base plate 255 can be positioned above a printed circuit board (PCB) (not shown), and the antenna 240 can rest on a top surface of the base plate 255. Alternatively, the antenna 240 can rest on an inner surface of the faceplate 252. Those of skill in the art, however, will appreciate that the antenna 240 does not necessarily have to be positioned between the face plate 252 and the base plate 255, as other locations may be suitable.

The antenna 240 further includes a transformer feeder part 210 and a resonator 215. The resonator 215 can contact a ground point (not shown) and the transformer feeder part 210 can contact a transmission line (not shown). As an example, the transmission line can have a characteristic impedance approximately equal to 50 ohms. In one arrangement, a gap 230 can exist between the resonator 215 and the transformer feeder part 210. A change in the location of the ground point may affect the performance of the antenna 240, but the location of the transformer feeder part 210 can be changed without necessarily affecting the functioning of the antenna 240.

As is known in the art, the transformer feeder part 210 can transmit and/or receive radio frequency signals to and from the resonator 215. The resonator 215 and the transformer feeder part 210 can resonate at an operating frequency. As an example, the operating frequency can include but is not limited to GPS signals, which may have a frequency of approximately 1.575 GHz, with deviations above and below that value. Of course, those of skill in the art will appreciate that the invention is not so limited, as the antenna 240 may resonate at any other suitable operating frequencies.

According to an exemplary embodiment of the present invention and as noted earlier, the antenna 240 can be positioned between the base plate 255 and the faceplate 252 of the keypad 246. As an example, the antenna 240 can be manufactured thin enough to fit in the space between the base plate 255 and the face plate 252 of the keypad 246. Moreover, because of where it is positioned in this particular arrangement, the antenna 240 can be located away from the visual display unit 205. Hence, the interference from the visual display unit 205 may not affect the functioning or operating characteristics of the antenna 240.

As noted earlier, a gap 230 exists between the resonator 215 and the transformer feeder part 210, which means that the resonator 215 and the transformer feeder part 210 are capacitively coupled. The length of the gap 230 can vary, depending on design requirements.

According to one embodiment of the present invention, the resonator 215 can be substantially triangular in shape, although the resonator 215 can be in any other suitable shape. As such, the bottom of the resonator 215 can taper, and the tip of the resonator 215 can be connected to a ground point (not shown) of the PCB (the base plate 255 can be configured to allow this connection). In another arrangement, the antenna 240 can be kept relatively thin by not incorporating a dielectric substance on the antenna 240. By avoiding such a dielectric substance, the antenna 240 can more easily fit between the base plate 255 and the face plate 252. Air gaps between the antenna 240 and the base plate 255 and the face plate 252 can serve as a suitable substitute for such a dielectric substance.

In one arrangement, the antenna 240 includes openings 260. These openings 260 are in the transformer feeder part 210 end the resonator 215. In one arrangement, the openings 260 can receive one or more buttons 265, such as the keypad buttons 250, which can permit the buttons 265 to pass from the PCB to the outside of the face plate 252, where they can be conventionally accessed by a user. This button 265 can include all the components necessary to receive a user's input and to transfer the input to the PCB. It has been shown, however, that these openings 260 do not substantially affect the performance of the antenna 240, as it is still able to resonate in the desired frequencies. It should be noted that the openings 260 are not limited to receiving the buttons 265, as other suitable components can pass through the openings 260.

The antenna 240 provided in the present invention can also be used as a secondary antenna along with a main subscriber antenna 235. As an example, the antenna 235 can be used to transmit and receive conventional communications signals, such as wireless voice and data signals at various frequencies. In addition, the antenna 240, in its capacity as a secondary antenna, can enable the wireless communication device 105 to receive (or even transmit) GPS signals, without interfering with the operation of the main subscriber antenna 235. Similarly, the main subscriber antenna 235 will not affect the operation of the antenna 240. Again, it must be stressed that the antenna 240 is not limited a GPS antenna, as the antenna 240 can be configured to receive and/or transmit other signals, such as Bluetooth or WLAN frequencies.

In another arrangement, other types of antennas may be positioned near or adjacent to the antenna 240. For example, a Bluetooth antenna or a WLAN antenna can be placed near the antenna 240 without affecting the operation of either antenna. These additional antennas, in view of their high resonating frequencies, can be made relatively small and can even be positioned on, for example, the inner surface of the face plate 252 or some other suitable surface.

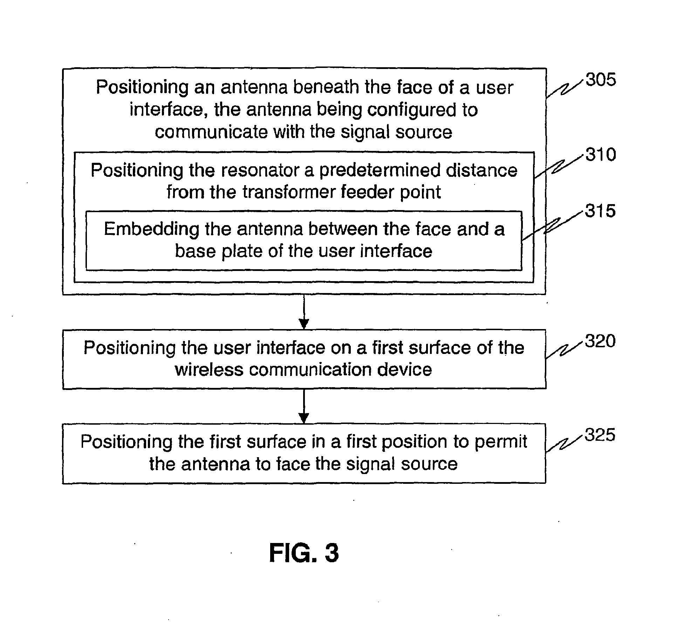

Turning now to FIG. 3, a method of building a wireless communication device is shown, according to one embodiment of the present invention. The method comprises the step of positioning an antenna beneath the face of a user interface of a wireless communication device in a manner that enables the antenna to communicate effectively with a signal source, as shown at step 305. As such, the user interface can be positioned on a first surface of the wireless communication device, as shown at step 320.

In addition, at step 325, the first surface can be positioned in a first position to permit the antenna to face the signal source. For example, the antenna can be a GPS antenna, and when a user puts the wireless device in a navigation mode, the antenna can face the signal source, which can be one or more GPS satellites. In this example, the first surface can be a surface of the base plate 255 or the face plate 252. This process can result in the radiation pattern of the antenna being directed to the signal source. Further, this radiation pattern may not include any nulls in the navigation mode. By positioning the antenna in this way, the reception of the GPS signals can be enhanced, as compared to having the GPS signals received at an antenna that is positioned near the top of the wireless device, such as the main subscriber antenna 235 of FIG. 2.

As per one embodiment, the user interface can be a keypad, and hence the antenna can be embedded between a faceplate of the keypad and a base plate of the keypad, as shown at step 315. Positioning the antenna beneath the user interface can further include positioning a resonator of the antenna at a predetermined distance from a transformer feeder part of the antenna, as shown at step 310. Of course, other methods of positioning the antenna beneath a user interface of the wireless device are within contemplation of one or more of the inventive arrangements.

Prior art antennas have poor efficiency in the navigation mode when held substantially parallel to a signal source. For example, a GPS-enabled wireless communication device used in the navigation mode shall provide less signal reception when the GPS antenna is not in a position that faces the signal source, for example, one or more GPS satellites. In the present invention, placing the antenna beneath the user interface, or a keypad, facilitates the reception of the radio frequency signals when the keypad of the wireless communication device is held facing the signal source, which is a position where most users hold the wireless device when attempting to obtain GPS or location information. An enhanced signal can be understood as a stronger signal reception on the wireless communication device when the antenna is positioned on a first surface or location as compared to the antenna being positioned on a second, less desirable surface or location.

Where applicable, the present invention can be realized in hardware, software or a combination of hardware and software. Any kind of computer system or other apparatus adapted for carrying out the methods described herein are suitable. A typical combination of hardware and software can be a mobile communications device with a computer program that, when being loaded and executed, can control the mobile communications device such that it carries out the methods described herein. Portions of the present invention may also be embedded in a computer program product, which comprises all the features enabling the implementation of the methods described herein and which when loaded in a computer system, is able to carry out these methods.

While the preferred embodiments of the invention have been illustrated and described, it will be clear that the invention is not so limited. Numerous modifications, changes, variations, substitutions and equivalents will occur to those skilled in the art without departing from the scope of the present invention as defined by the appended claims.

## Claims

1. A wireless communication device, the wireless communication device comprising:
at least one antenna (240), the antenna (240) positioned beneath the face of a user interface of the wireless communication device wherein the antenna (240) is configured to communicate with a signal source, wherein the antenna (240) includes a resonator (215) capacitively coupled to a transformer feeder part (210), and a gap (230) in between, wherein the resonator (215) and the transformer feeder part (210) include openings (260) in the antenna (240) for receiving corresponding keypad buttons (265).

2. The wireless communication device of claim 1, wherein the user interface is positioned at a first surface of the wireless communication device.

3. The wireless communication device of claim 1, wherein the user interface is a keypad (246), wherein the antenna (240) is positioned between a face (252) of the keypad and a base plate (255) of the keypad (246).

4. The wireless communication device of claim 1, wherein at least a portion of the antenna is substantially triangular in shape.

5. The wireless communication device of claim 1, wherein the antenna (240) is a global positioning system antenna configured to at least receive global positioning system signals.

6. A method of building a wireless communication device, the method comprising:
positioning at least one antenna (240) beneath a face of a user interface of the wireless communication device, wherein the antenna (240) is configured to communicate with a signal source, wherein the antenna (240) includes a resonator (215) capacitively coupled to a transformer feeder part (210) and a gap (230) in between, wherein the resonator (215) and the transformer feeder part (210) include openings (260) in the antenna (240) for receiving corresponding keypad buttons (265).

7. The method of claim 6, further comprising positioning the resonator (215) a predetermined distance away from the transformer feeder part (210).

8. The method of claim 7, wherein the positioning step further comprises embedding the antenna (240) between a face plate (252) of the user interface and a base plate (255) of the user interface, the user interface being a keypad (246) of the wireless communication device.

## Patentansprüche

1. Drahtlose Kommunikationsvorrichtung, wobei die drahtlose Kommunikationsvorrichtung umfasst:
zumindest eine Antenne (240), wobei die Antenne (240) unter der Vorderseite einer Benutzerschnittstelle der drahtlosen Kommunikationsvorrichtung angeordnet ist, wobei die Antenne (240) ausgebildet ist, mit einer Signalquelle zu kommunizieren, wobei die Antenne (240) einen Resonator (215), der kapazitiv an ein Transformatoreinspeiseteil (210) gekoppelt ist, und einen dazwischen liegenden Spalt (230) beinhaltet, wobei der Resonator (215) und das Transformatoreinspeiseteil (210) Öffnungen (260) in der Antenne (240) zum Aufnehmen entsprechender Tasten (265) beinhaltet.

2. Drahtlose Kommunikationsvorrichtung nach Anspruch 1, wobei die Benutzerschnittstelle an einer ersten Fläche der drahtlosen Kommunikationsvorrichtung angeordnet ist.

3. Drahtlose Kommunikationsvorrichtung nach Anspruch 1, wobei die Benutzerschnittstelle eine Tastatur (246) ist, wobei die Antenne (240) zwischen einer Vorderseite (252) der Tastatur und einer Grundplatte (255) der Tastatur (246) angeordnet ist.

4. Drahtlose Kommunikationsvorrichtung nach Anspruch 1, wobei zumindest ein Bereich der Antenne eine im Wesentlichen dreieckige Form hat.

5. Drahtlose Kommunikationsvorrichtung nach Anspruch 1, wobei die Antenne (240) eine globale Positionsbestimmungssystemantenne ist, die ausgebildet ist, zumindest globale Positionsbestimmungssystemsignale zu empfangen.

6. Verfahren zum Herstellen einer drahtlosen Kommunikationsvorrichtung, wobei das Verfahren umfasst:
Anordnen zumindest einer Antenne (240) unter einer Vorderseite einer Benutzerschnittstelle der drahtlosen Kommunikationsvorrichtung, wobei die Antenne (240) ausgebildet ist, mit einer Signalquelle zu kommunizieren, wobei die Antenne (240) einen Resonator (215), der kapazitiv mit einem Transformatoreinspeisungsteil (210) gekoppelt ist, und einen dazwischen liegenden Spalt (230) beinhaltet, wobei der Resonator (215) und das Transformatoreinspeiseteil (210) Öffnungen (260) in der Antenne (240) zum Aufnehmen entsprechender Tasten (265) beinhaltet.

7. Verfahren nach Anspruch 6, ferner umfassend Anordnen des Resonators (215) mit einem vorher festgelegten Abstand entfernt von dem Transformatoreinspeiseteil (210).

8. Verfahren nach Anspruch 7, wobei der Anordnungsschritt ferner das Einbetten der Antenne (240) zwischen einer Vorderseitenplatte (252) der Benutzerschnittstelle und einer Grundplatte (255) der Benutzerschnittstelle umfasst, wobei die Benutzerschnittstelle eine Tastatur (246) der drahtlosen Kommunikationsvorrichtung ist.

## Revendications

1. Dispositif de communication sans fil, le dispositif de communication sans fil comprenant :
au moins une antenne (240), l'antenne (240) disposée en dessous de la face d'une interface utilisateur du dispositif de communication sans fil dans lequel l'antenne (240) est configurée pour communiquer avec une source de signal, dans lequel l'antenne (240) inclut un résonateur (215) accouplé de façon capacitive à une pièce d'alimentation transformateur (210), et un écartement (230) entre les deux, dans lequel le résonateur (215) et la pièce d'alimentation transformateur (210) incluent des ouvertures (260) dans l'antenne (240) pour recevoir des boutons clavier (265) correspondants.

2. Le dispositif de communication sans fil selon la revendication 1, dans lequel l'interface utilisateur est disposée à une première surface du dispositif de communication sans fil.

3. Le dispositif de communication sans fil selon la revendication 1, dans lequel l'interface utilisateur est un clavier (246), dans lequel l'antenne (240) est disposée entre une face (252) du clavier et une plaque de base (255) du clavier (246).

4. Le dispositif de communication sans fil selon la revendication 1, dans lequel au moins une section de l'antenne a une forme essentiellement triangulaire.

5. Le dispositif de communication sans fil selon la revendication 1, dans lequel l'antenne (240) est une antenne de système de localisation mondial (global positioning system) configurée pour au moins recevoir des signaux de système de localisation mondial.

6. Procédé de construire un dispositif de communication sans fil, le procédé comprenant :
disposer au moins une antenne (240) en dessous d'une face d'une interface utilisateur du dispositif de communication sans fil, dans lequel l'antenne (240) est configurée pour communiquer avec une source de signal, dans lequel l'antenne (240) inclut un résonateur (215) accouplé de façon capacitive à une pièce d'alimentation transformateur (210) et un écartement (230) entre les deux, dans lequel le résonateur (215) et la pièce d'alimentation transformateur (210) incluent des ouvertures (260) dans l'antenne (240) pour recevoir des boutons clavier (265) correspondants.

7. Le procédé selon la revendication 6, comprenant en outre positionner le résonateur (215) à une distance prédéterminée éloigné de la pièce d'alimentation transformateur (210).

8. Le procédé selon la revendication 7, dans lequel l'étape de positionner comprend en outre enchâsser l'antenne (240) entre une plaque de face (252) de l'interface utilisateur et une plaque de base (255) de l'interface utilisateur, l'interface utilisateur étant un clavier (246) du dispositif de communication sans fil.
